(19) Europäisches Patentamt
European Patent Office
Office européen des brevets

(11) Veröffentlichungsnummer: **0 469 436 A1**

(12) **EUROPÄISCHE PATENTANMELDUNG**

(21) Anmeldenummer: **91112308.1**

(51) Int. Cl.5: **C08G 69/34**

(22) Anmeldetag: **23.07.91**

(30) Priorität: **27.07.90 DE 4023969**

(43) Veröffentlichungstag der Anmeldung:
**05.02.92 Patentblatt 92/06**

(84) Benannte Vertragsstaaten:
**CH DE FR GB IT LI NL**

(71) Anmelder: **EMS-INVENTA AG**
**Selnaustrasse 16**
**CH-8001 Zürich(CH)**

(72) Erfinder: **Thullen, Helmut, Dipl.-Chem.**
**Via Caschners 27**
**CH-7402 Bonaduz(CH)**
Erfinder: **Schmid, Eduard, Dr. sc. Nat.**
**Valbeuna**
**CH-7402 Bonaduz(CH)**

(54) **Copolyamide, Verfahren zu ihrer Herstellung und ihre Verwendung.**

(57) Die Erfindung betrifft steife, amorphe und in einer einstufigen Polykondensationsreaktion herstellbare Copolyamide mit hoher Glasumwandlungstemperatur und einer geringen Wasseraufnahmefähigkeit, bestehend im wesentlichen aus cycloaliphatischen Diaminen, dimerisierten Fettsäuren sowie aromatischen Dicarbonsäure.

EP 0 469 436 A1

Die Erfindung betrifft neue Copolyamide, die sich zur Herstellung von Formkörpern mit hoher Glasumwandlungstemperatur, Steifigkeit und Schlagzähigkeit bei geringer Feuchtigkeitsaufnahme auszeichnen, ein Verfahren zur Herstellung dieser Copolyamide wie ihre Verwendung zur Herstellung von Formkörpern.

Thermoplastisch verarbeitbare Polyamide lassen sich in semikristalline sowie amorphe Homo- und Copolyamide unterteilen.

Die semikristallinen Polyamide bilden eine wesentliche Gruppe der technischen Thermoplasten. Aus ihnen hergestellte Formktörper zeichnen sich durch hohe Festigkeit, Steifigkeit, Zähigkeit und Oberflächenhärte, durch ein gutes Abriebverhalten sowie ausgezeichnete Chemikalien- und Spannungskorrosionsbeständigkeit aus. Die Einsatzfähigkeit dieser semikristallinen Homo- und Copolyamide, wie beispielsweise der hochschmelzenden Homopolyamide PA 6 und PA 6.6, wird jedoch durch ihre Neigung zur Wasseraufnahme und die damit verbundene Herabsetzung der Glasumwandlungstemperatur, die eine Verringerung der Steifigkeit und Festigkeit bedingt, wesentlich beeinflußt.

Steife amorphe Copolyamide werden im allgemeinen aus aromatischen Dicarbonsäuren und Diaminen mit kristallisationshemmender Struktur hergestellt, wobei sie weiter Comonomere, wie Aminosäuren, Lactame und Salze aus Diaminen und Dicarbonsäuren enthalten können. Durch die Auswahl der jeweils eingesetzten Monomeren können die Eigenschaften derartiger Copolyamide in weiten Bereichen gezielt variiert werden.

Wie bereits erwähnt, fällt die Glasumwandlungstemperatur durch Feuchtigkeitsaufnahme ab, wodurch sich wiederum die Steifigkeit und Festigkeit verringern. Ebenso wird dadurch die Höhe der Gebrauchstemperatur von Formteilen erheblich abgesenkt, was eine wesentliche Einschränkung ihrer Einsatzfähigkeit zur Folge hat.

Amorphe Copolyamide werden beispielsweise in den folgenden Patentschriften beschrieben: GB 619,707, CH 449,256, US 2,494,563, US 3,842,045, US 3,840,501, JP 72/11,502, US 2,969,482, US 3,597,400, DE 21 59 803 und CH 624,970.

Es ist auch bekannt, zur Herstellung von Polyamiden und Copolyamiden polymere, insbesondere dimerisierte Fettsäuren, einzusetzen. Diese Materialien werden beispielsweise in der Kleb- und Schmierstoffpolymerchemie eingesetzt. Die Struktur und die Eigenschaften von dimerisierten Fettsäuren werden beispielsweise ausführlich in der Firmenschrift der Firma Henkel-Emery/Gouda (NL) unter dem Titel "Empol Dimer- and Polybasic Acids, Technical Bulletin 114" beschrieben. Diese dimerisierten Fettsäuren werden durch eine spezifische Polymerisationsreaktion aus monomeren ungesättigten Fettsäuren mit meistens 18 Kohlenstoffatomen gewonnen. Es gibt viele Produkte mit unterschiedlichem Verhältnis der monofunktionellen, difunktionellen, trifunktionellen und polyfunktionellen Säuren. Zur Herstellung von thermoplastischen Polyamiden werden Typen mit hohem Dimeranteil, beispielsweise 90% und insbesondere 97%, bevorzugt.

Dimerisierte Fettsäuren können ferner in Polyamiden für Oberflächenbeschichtungen und Kleber verwendet werden (vergleiche die US 3,231,545). Alkohollösliche Hilfsstoffe für Druckschwärzen beschreiben die BE 804 604 und die GB 1 129 195. In der CA 861 620 werden Polyamide aus 1-Amino-3-aminomethyl-3,5,5'-trimethylcyclohexan, wahlweise weiteren Diaminen und insbesondere mindestens 25 Mol-% aller Säureanteile dimerisierten Fettsäuren beschrieben, wobei Sebazinsäure als bevorzugte Dicarbonsäure eingesetzt wird. Diese bekannten Copolyamide besitzen niedrige Steifigkeiten. Der Einfluß von aromatischen Dicarbonsäuren, insbesondere in Molanteilen von mehr als 25%, bezogen auf alle Säuren, auf die Glasumwandlungstemperatur $T_G$ und die Steifheit wurde in dieser CA-PS nicht erkannt, was beispielsweise aus der Tatsache hervorgeht, daß die dort beschriebenen Copolyamide zur Herstellung von besonders flexiblen Produkten, wie Kleber, Schuhkleber und Folien, verwendet werden.

Für viele technische Anwendungszwecke werden thermoplastisch verarbeitbare Kunststoffe mit hoher Steifigkeit und Festigkeit gefordert, die diese Eigenschaften bei der Einwirkung von Feuchtigkeit, beispielsweise hoher Luftfeuchtigkeit, oder beim Kontakt mit Wasser beibehalten. Die Feuchtigkeitsaufnahme soll dabei so gering sein, daß die Glasumwandlungstemperatur nach Möglichkeit wenig beeinflußt bleibt, d.h. durch Feuchtigkeitsaufnahme wenig herabgesetzt wird.

Die Erfindung hat sich die Aufgabe gestellt, steife Copolyamide mit einer hohen Glasumwandlungstemperatur und mit hoher Festigkeit, Steifigkeit, Zähigkeit und Wärmeformbeständigkeit zu schaffen, wobei die Glasumwandlungstemperatur durch Feuchtigkeitsaufnahme unwesentlich beeinträchtigt werden soll.

Diese Aufgabe wird durch die amorphen Copolyamide gemäss Patentanspruch 1 gelöst. Die Ansprüche 9 und 10 beinhalten ein Verfahren zur Herstellung beziehungsweise die Verwendung dieser amorphen Copolyamide.

Die Erfindung beruht demgemäss auf der überraschenden Erkenntnis, daß amorphe Copolyamide aus

a) 50 Mol-% wenigstens eines cycloaliphatischen Diamins der Formel I,

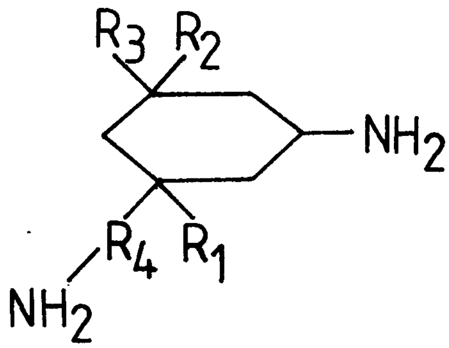

I

worin $R_1$, $R_2$, $R_3$ und $R_4$ Alkylreste mit 1 bis 3 Kohlenstoffatomen sind,

b) 5 bis 25 Mol-% einer dimerisierten Fettsäure,

c) 25 bis 45 Mol-% mindestens einer aromatischen Dicarbonsäure

wobei sich die Molsumme der Komponenten a) bis c) zu 100% ergänzt, und zusätzlich

d) 0 bis 50 Mol-% weiteren polyamidbildendem Monomeren,

sich dadurch auszeichnen, dass sie eine geringe Wasseraufnahme und dadurch nur eine geringe Änderung der Glasumwandlungstemperatur zeigen, so daß aus ihnen hergestellte Formkörper eine hohe Festigkeit, Steifigkeit und Wärmeformbeständigkeit besitzen, wobei diese Eigenschaften auch dann beibehalten werden, wenn diese Formkörper der Einwirkung von Feuchtigkeit bei hohen Temperaturen ausgesetzt werden.

In einem Molanteil von weniger als 50% können die erfindungsgemäßen Polyamide auch weitere Diamine und Dicarbonsäuren als Monomere enthalten.

Als cycloaliphatische Diamine werden vorzugsweise Derivate des Cyclohexans, die in 3- und 5-Stellung mit Alkylgruppen und/oder Alkylaminogruppen und in 1-Stellung mit einer Aminogruppe substiruiert sind, verwendet. In ganz besonders bevorzugter Weise wird 1-Amino-3-aminomethyl-3,5,5'-trimethylcyclohexan, das nachfolgend als "Diamin" bezeichnet wird, eingesetzt.

Ein besonders geeignetes amorphes Copolyamid zeichnet sich dadurch aus, daß es aus

a) 50 Mol-% wenigstens eines cycloaliphatischen Diamins der Formel I, wobei $R_1$, $R_2$, $R_3$ und $R_4$ Alkylreste mit 1 bis 3 Kohlenstoffatomen sind,

b) 5 bis 12 Mol-% einer dimerisierten Fettsäure und

c) 38 bis 45 Mol-% mindestens einer aromatischen Dicarbonsäure besteht, wobei sich die Molsumme zu 100% ergänzt.

Als dimerisierte Fettsäuren b), die in den erfindungsgemäßen amorphen Copolymeren eingesetzt werden, kommen insbesondere diejenigen in Frage, die in der weiter oben erwähnten Firmenschrift der Firma Henkel-Emery/Gouda (NL) beschrieben werden, d.h. solche, die auf ungesättigte Fettsäuren zurückgehen, welche meistens 18 Kohlenstoffatome enthalten. Vorzugsweise werden erfindungsgemäß solche dimerisierte Fettsäuren eingesetzt, die einen Dimeranteil von mindestens 90 Gew.-% und in besonders bevorzugter Weise von mindestens 97 Gew.-% besitzen. Bevorzugt werden solche dimerisierten Fettsäuren, die hydriert und destilliert worden sind und damit eine helle Eigenfarbe besitzen.

Als aromatische Dicarbonsäuren c), die zum Einsatz in den erfindungsgemäßen amorphen Copolyamiden gelangen, werden vorzugsweise ein- oder mehrkernige, gegebenenfalls substituierte, aromatische Dicarbonsäuren, wie beispielsweise Isophthalsäure, Terephthalsäure, Naphthalindicarbonsäure, tert.-Butylisophthalsäure oder 1,1,3-Trimethyl-3-phenylindan-4',5-dicarbonsäure oder ihre Gemische verwendet. Besonders bevorzugt werden Isophthalsäure und Terephthalsäure oder ein Gemisch dieser Säuren, das vorzugsweise mindestens 25 Mol-% Isophthalsäure enthält.

Als polyamidbildende Monomere d), die in den erfindungsgemäßen amorphen Copolyamiden eingesetzt werden können, kommen in der Polyamidherstellung übliche Monomere in Frage, wie aliphatische Dicarbonsäuren mit 6 bis 20 Kohlenstoffatomen, aliphatische Diamine mit 2 bis 20 Kohlenstoffatomen und/oder aromatisch-aliphatische Diamine mit 6 bis 12 Kohlenstoffatomen, wie beispielsweise m-Xylidendiamin oder p-Xylidendiamin. Ferner kann man Aminosäuren und Lactame mit 4 bis 14 Kohlenstoffatomen einsetzen.

Ganz besonders bevorzugte erfindungsgemäße Copolyamide sind solche, die aus 1-Amino-3-aminomethyl-3,5,5'-trimethylcyclohexan sowie dimerisierten Fettsäuren in einem Gesamtmolanteil von höchstens 12%, d.h. mit einem auf die Carboxylgruppen bezogenen Molanteil von höchtstens 24%, und aromatischen Dicarbonsäuren bestehen, insbesondere aus Isophthalsäure als Hauptkomponente des aromatischen Säureanteils.

Die erfindungsgemäßen amorphen Copolyamide sind steif und transparent und zeigen hohe Glasumwandlungstemperaturen, die zwischen 95 °C und 180 °C liegen, wobei diese im Gebrauch infolge der

geringen Feuchtigkeitsaufnahme im Gegensatz zu amorphen Copolyamiden nach dem Stand der Technik nur wenig absinken. Die Glasumwandlungstemperatur kann durch das Verhältnis von dimerisierter Fettsäure zu aromatischer Dicarbonsäure eingestellt werden. Wird z.B. das erfindungsgemäße Copolyamid aus "Diamin" mit dimerisierter Fettsäure mit einem Dimeranteil von mindestens 90 Gew.-% sowie Isophthalsäure hergestellt, so liegt sein $T_G$ bei einem Dimersäureanteil von 25 Mol-% bei 97° C, bei einem Dimersäureanteil von 12 Mol-% bei 158° C sowie bei einem Dimersäureanteil von nur 7,5 Mol-% bei ca. 177° C.

Wie bereits erwähnt, besteht die herausragende Eigenschaft der erfindungsgemäßen amorphen Copolyamide in der geringen Feuchtigkeitsaufnahme, wobei die Glasumwandlungstemperatur nur wenig absinkt und damit auch die Formstabilität, Transparenz und Steifigkeit weitgehend erhalten bleiben. Damit werden für die erfindungsgemäßen Copolyamide Anwendungsbereiche erschlossen, für die bisher weder Copolyamide noch Polyamide eingesetzt werden konnten.

Beispielsweise nimmt ein Copolyamid aus 50 Mol-% "Diamin", 12 Mol-% dimerisierter Fettsäure, 21 Mol-% Isophthalsäure und 17 Mol-% Terephthalsäure beim Konditionieren bei Raumtemperatur und einer relativen Feuchtigkeit von 50% nur 1,3 Gew.-% Wasser auf, wobei seine Glasumwandlungstemperatur von 158° C auf 138° C absinkt.

Die erfindungsgemäßen Copolyamide zeichnen sich ferner durch eine hohe Steifigkeit und Schlagzähigkeit aus. Reicht die Kerbschlagzähigkeit für bestimmte Anwendungen in der Praxis nicht aus, kann diese durch Zusatz üblicher Mengen an für Polyamide gebräuchlichen Schlagzähmodifikatoren angehoben werden. Derartige Schlagzähmodifikatoren sind beispielsweise Kern-Mantel-Polymere oder mit Maleinsäureanhydrid gepfropfte, olefinische Elastomere.

Die erfindungsgemäßen Copolyamide sind bis zu hohen Molekulargewichten kondensierbar und lassen sich leicht aus dem zu ihrer Herstellung eingesetzten Autoklaven austragen. Falls kein Lactam als zusätzliches Monomeres verwendet wird, besitzen sie auch nur sehr geringe Restextraktmengen. Eine Kettenlängenregelung ist leicht möglich durch gezielte Zugabe von beispielsweise monofunktionell wirkenden Verbindungen, wie beispielsweise von Monocarbonsäuren, wie Benzoesäure oder Essigsäure, oder von Monoaminen wie Cyclohexylamin oder Isotridecylamin.

Ferner können die erfindungsgemäßen Copolyamide unter Einsatz üblicher Polyamidmodifizierungsmittel modifiziert und den jeweiligen Einsatzzwecken angepaßt werden. Als Hitzestabilisatoren können beispielsweise sterisch gehinderte Phenole eingesetzt werden, desgleichen Phosphite oder auch Hitzestabilisatoren des Kupfer-Halogentyps. Ferner können den erindungsgemäßen Copolyamiden auch Lichtstabilisatoren, beispielsweise gehinderte Amine oder Oxazolinderivate oder Kombinationen von Hitze- und Lichtstabilisatoren, zugesetzt werden. Eine Einfärbung unter Einsatz organischer Farbstoffe oder anorganischer Pigmente ist möglich. Die Bewitterungsstabilität kann beispielsweise durch den Zusatz von Ruß, gegebenenfalls in Kombination mit Phenol oder einem Kupferhalogenstabilisierungsmittel, verbessert werden.

Ferner können die erfindungsgemässen Copolyamide neben der erwähnten Schlagzähmodifizierung auch durch Mineralfasern, Glasfasern oder durch Einsatz anderer anorganischer oder organischer Fasern verstärkt werden, ferner können sie durch Einsatz von Halogenverbindungen, rotem Phosphor oder wasserabspaltenden Materialien, wie Magnesiumhydroxid, flammenwidrig eingestellt werden. Auch ist eine Elastomerzugabe zur Schlagzähigkeitserhöhung in Kombination mit dem Zusatz eines Antiflammittels, beispielsweise des Halogentyps, möglich.

Die erfindungsgemäßen Copolyamide lassen sich, vorzugsweise nach Spritzgußverfahren, leicht zur Herstellung von Formteilen verwenden, die sich durch eine hohe, vom Feuchtigkeitsgehalt wenig beeinflußte Glasumwandlungstemperatur und hohe Steifigkeit sowie Schlagzähigkeit auszeichnen, insbesondere für Formteile mit dünner Wandstärke. Ferner können sie durch Extrusion zu steifen Rohren oder Ummantelungen von beispielsweise Lichtwellenleitern verarbeitet werden. Im Folienbereich können sie in Kombination mit anderen Polymeren beispielsweise durch Coextrusionsverfahren verarbeitet werden.

Die folgenden Beispiele erläutern die Erfindung.

Nachstehend werden die Herstellung der erfindungsgemäßen Copolyamide und die Bestimmung ihrer Eigenschaften beschrieben. Es wurden folgende Messungen durchgeführt:

1. Wasseraufnahme
   - bei 50% rel. Luftfeuchte
   - bei 100% rel. Luftfeuchte
2. DSC-Messungen:

   Messungen an Material

   - nach Erreichung des Gleichgewichtswassergehalts bei 50% rel. Luftfeuchte
   - nach Erreichung des Gleichgewichtswassergehalts bei 100% rel. Luftfeuchte

   Die DSC-Messungen wurden mit folgendem Gerät durchgeführt:

Typ : 1091 B "Thermal Analyzer"
Hersteller : Du Pont

Die Proben wurden mit 20 ° C/Min aufgeheizt.

Um Glasumwandlungstemperaturen in feuchtem Zustand reproduzierbar bestimmen zu können, wurden die Proben in Spezialpfännchen aus Stahl eingefüllt und dicht verschlossen.

Spezialpfännchen

Typ : "Large Volume Capsules"
Hersteller : Perkin Elmer

3. Relative Viskosität als 0,5%-ige Lösung im m-Kresol nach DIN 53727

Die erindungsgemäßen Copolyamide können in für die Polyamidherstellung üblichen Autoklaven hergestellt werden. Die Aufbereitung der erhaltenen Reaktionsmischung kann getrennt in einem sogenannten Lösegefäß oder direkt im Autoklaven erfolgen. Ist ein Schmelzeaufbereitungs- oder Lösegefäß vorgeschaltet, so wird dort bevorzugt die Neutralisationsreaktion, d.h. die Salzbildung, unter Zusatz der dazu nötigen Menge Wasser durchgeführt. Dabei entsteht Wärme und bei geschlossenem Gefäß ein Druckaufbau. Bei Bedarf kann zusätzlich unter Rühren und Wärmezufuhr soweit erhitzt werden, daß eine homogene, gut rührbare Mischung entsteht. Dabei sollte die Temperatur von 160 ° C bis 180 ° C, bei der die Kondensationsreaktion einsetzt, nicht überschritten werden.

Die Schmelzeaufbereitung und die Kondensation erfolgen unter Inertgasatmosphäre im Autoklaven, insbesondere unter Überleiten von Stickstoff; auch Wasserdampf kann z.B. während der Druckphase ganz oder teilweise die Inertgasatmosphäre bilden.

Die Polykondensationsreaktion wird bevorzugt unter Einhaltung einer Druckphase eingeleitet. Diese reduziert den unerwünschten Verlust an flüchtigen Monomerbestandteilen in der Anfangsstufe des Polymeraufbaues. Während der Druckphase kann die Schmelze langsam aufgeheizt werden. Im allgemeinen wird langsam und stufenweise entspannt. Beim Erreichen von Atmosphärendruck wird kontinuierlich Stickstoff über die Schmelze geleitet, wobei gleichzeitig die Kondensationsreaktion abläuft, die zusätzlich durch Anlegen von Vakuum gefördert werden kann.

Während der Druck- und der anschließenden Entgasungsphasen wird die Schmelze kontinuierlich gerührt.

Für die Druckphase wird eine Temperatur von ca. 200 ° C bis 280 ° C, bei gleichzeitigem Druckaufbau von 2 bis 30 bar, für die Entgasungs- und Polymendensationsphase von ca. 240 ° C bis 320 ° C eingehalten und damit ein Polymeres angestrebt, dessen Summe aller Endgruppen unter 300 μÄq/g Polymer liegt.

Beispiele

| | Diamin (Mol-%) | dimerisierte Fettsäure (Mol-%) | aromatische Dicarbonsäure (Mol-%) |
|---|---|---|---|
| Nr. 1 | "Diamin" (50) | "Dimersäure 2"(12,0) | IPS(21,1) TPS(16,9) |
| Nr. 2 | "Diamin" (50) | "Dimersäure 1"(10,0) | IPS(40,0) |
| Nr. 3 | "Diamin" (50) | "Dimersäure 1"( 7,5) | IPS(42,5) |

Vergleichsbeispiele:

Nr. 4 amorphes Copolyamid, im wesentlichen bestehend aus:
43 Mol-% Hexamethylendiamin
7 Mol-% "Diamin"
45 Mol-% IPS
5 Mol-% TPS

Nr. 5 amorphes Copolyamid, im wesentlichen bestehend aus:
29,0 Mol-% Hexamethylendiamin
19,0 Mol-% 1-Amino-3-aminotethyl-3,5,5'-trimethylcyclohexan
4,5 Mol-% Caprolactam
31,5 Mol-% TPS
15,5 Mol-% IPS

Nr. 6 amorphes Copolyamid auf Basis "Diamin" und "Dimersäure 1", entspricht Beispiel A aus CA 861 620

Nr. 7 Copolyamid auf Basis "Diamin" und "Dimersäure 1", entspricht CA 861 620, Example IIb

Nr. 8 Copolyamid auf Basis "Diamin" und "Dimersäure 1", entspricht CA 861 620, Example IIf

Erläuterung der Bezeichnungen:

"Diamin" = 1-Amino-3-aminomethyl-3,5,5'-trimethylcyclohexan
"Dimersäure 1" = Gemisch dimerisierter Fettsäuren mit Gehalt an:
Monomer < 0,1 %
Dimer > 98,0 %
Trimer < 1,0 %
sonstige < 1,0 %
(Pripol 1009 von Unichema Internat.)
"Dimersäure 2" = Gemisch dimerisierter Fettsäuren mit Gehalt an:
Monomer ca. 4,0 %
Dimer ca. 91,0 %
Trimer ca. 5,0 %
(Empol 1014 von Henkel-Emery)
IPS = Isophthalsäure
TPS = Terephthalsäure

Im einzelnen wurden die Beispiele wie folgt durchgeführt:

Beispiel 1:

In den Löser eines 20 l Autoklaven wurden folgende Edukte und Zusätze gegeben:

2,720 kg (15,97 Mol) "Diamin"
2,190 kg ( 3,84 Mol) "Dimersäure 2"
1,120 kg ( 6,74 Mol) Isophthalsäure
0,897 kg ( 5,40 Mol) Terephthalsäure
0,019 kg ( 0,12 Mol) 3-Amino-1-cyclohexylaminopropan
0,015 kg ( 0,12 Mol) Benzoesäure
0,020 kg ( 0,19 Mol) Natriumdihydrogenhypophosphitmonohydrat
0,500 kg Wasser
0,005 kg Antischaummittel

Verhältnis Amin/Säure: 1 : 1 (einschließlich Kettenlängenregler

Das Gemisch wurde 2 Stunden bei einem Druck von 20 bar auf 250 °C erhitzt und in der Entgasungsphase während 4 Stunden von 260 °C auf 295 °C erhitzt. Das Polymerisat wurde als Strang abgezogen und granuliert.

Ergebnis:

| | |
|---|---|
| relative Viskosität: | 1,294 |
| $NH_2$-Endgruppen: | 34 µMol/g |
| COOH-Endgruppen: | 65 µMol/g |
| Schmelzviskosität (122,6 N/270 °C): | 603 PA's |
| Glasübergangstemperatur: | 158 °C |

Beispiel 2:

In den Löser eines 20 l Autoklaven wurden folgende Edukte und Zusätze gegeben:

3,274 kg (19,22 Mol) "Diamin"
2,195 kg ( 3,83 Mol) "Dimersäure 2"
2,195 kg (15,31 Mol) Isophthalsäure
0,044 kg ( 0,28 Mol) 3-Amino-1-cyclohexylaminopropan
0,025 kg ( 0,24 Mol) Natriumdihydrogenhypophosphitmonohydrat
0,500 kg Wasser
0,005 kg Antischaummittel

Totales Verhältnis Amin/Säure: 1 : 1 (einschließlich Kettenlängenregler)

Das Gemisch wurde 2 Stunden bei einem Druck von 20 bar auf 260 °C erhitzt und in der Entgasungsphase während 4 Stunden von 260 °C auf 295 °C erhitzt. Das Polymerisat wurde als Strang abgezogen und granuliert.

Ergebnis:

| | |
|---|---|
| relative Viskosität: | 1,280 |
| $NH_2$-Endgruppen: | 45 µMol/g |

COOH-Endgruppen: 47 µMol/g
Schmelzviskosität (122,6 N/270 °C) 987 PA's
Glasübergangstemperatur: 158 °C

Beispiel 3:

In den Löser eines 20 l Autoklaven wurden folgende Edukte und Zusätze gegeben:
3,441 kg (20,21 Mol) "Diamin"
1,730 kg ( 3,02 Mol) "Dimersäure 2"
2,842 kg (17,11 Mol) Isophthalsäure
0,044 kg ( 0,28 Mol) 2-Amino-1-cyclohexylaminopropan
0,020 kg ( 0,19 Mol) Natrium-dihydrogen-hypophosphitmonohydrat
0,500 kg Wasser
0,005 kg Antischaummittel
Totales Verhältnis Amin/Säure: 1 : 1 (einschließlich Kettenlängenregler)

Das Gemisch wurde 2 Stunden bei einem Druck von 20 bar auf 260 °C erhitzt und in der Entgasungsphase während 4 Stunden von 260 °C auf 295 °C erhitzt. Das Polymerisat wurde als Strang abgezogen und granuliert.

Ergebnis:
relative Viskosität: 1,325
$NH_2$-Endgruppen: 49 µMol/g
COOH-Endgruppen: 54 µMol/g
Schmelzviskosität (122,6 N/270 °C): 1875 PA's
Glasübergangstemperatur: 177 °C

Tabelle 1: analytische Werte

| Beispiel | Endgruppen $-NH_2$ [ Mol/g] | Endgruppen -COOH [µMol/g] | relative Viskosität | Schmelzviskosität 270°C/122,6 N [Pa*s] |
|---|---|---|---|---|
| Nr. 1 | 34 | 65 | 1,294 | 603 |
| Nr. 2 | 45 | 47 | 1,280 | 987 |
| Nr. 3 | 49 | 54 | 1,260 | 1875 |

Vergleichsbeispiele:

| | | | | |
|---|---|---|---|---|
| Nr. 4 | 35 | 110 | 1,44 | 1200 |
| Nr. 5 | 50 | 50 | 1,36 | 2000 |
| Nr. 6 | 33 | 25 | | |
| Nr. 7 | 5 | 86 | 1,203 | |
| Nr. 8 | 13 | 189 | | |

In den Tabellen 1 und 2 sind die Eigenschaften der hergestellten Copolyamide zusammengefaßt.

Dabei zeigt Tabelle 2 eindeutig die geringe Änderung des $T_G$ aufgrund der Feuchtigkeitsaufnahme nach Konditionieren bei 100% und 50% Luftfeuchtigkeit. Dieser Vorteil ist besonders wichtig für den Einsatz in feuchter Luft und bei Temperaturen über 100 °C, während die Vergleichsmaterialien auf Grund ihrer hohen Wasseraufnahme und des $T_G$-Abfalls in kochendem Wasser und bei Temperaturen um 100 °C versagen.

Tabelle 2: Wasseraufnahme und Glasübergangstemperaturen

Die Tabelle zeigt die Abhängigkeit der Wasseraufnahme und die Änderung der Glastemperatur bei unterschiedlichen Anteilen an Dimersäure im Copolyamid.

| Beispiel | Tg trocken | Tg Gleichgewichtswasseraufnahme Luftfeuchte 100% | Gleichgewichtswasseraufnahme Luftfeuchte 100% | Tg Gleichgewichtswasseraufnahme Luftfeuchte 50% | Gleichgewichtswasseraufnahme Luftfeuchte 50% |
|---|---|---|---|---|---|
| | | 23°C | 23°C | 23°C | 23°C |
| | [°C] | [°C] | [%] | [°C] | [%] |
| Nr. 1 | 158 | 120 | 3,3 | 138 | 1,3 |
| Nr. 2 | 165 | 133 | 3,9 | 149 | 1,4 |
| Nr. 3 | 177 | 131 | 4,5 | 163 | 1,8 |
| Vergleichsbeispiel | | | | | |
| Nr. 4 | 140 | 62 | 7,3 | 101 | 2,8 |
| Nr. 5 | 170 | 82 | 9,8 | 123 | 3,0 |
| Nr. 6 | 53 | | | | |
| Nr. 7 | 13 | | | | |
| Nr. 8 | -11 | (teilkristallines PA, Schmelzpunkt 57°C) | | | |

## Patentansprüche

**1.** Amorphes Copolyamid aus

a) 50 Mol-% wenigstens eines cycloaliphatischen Diamins der Formel

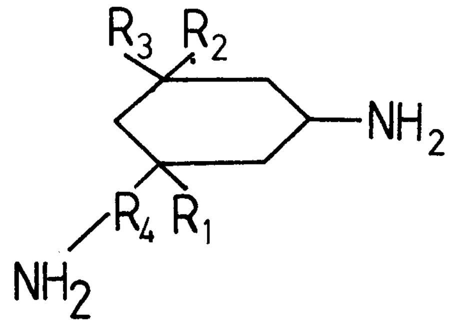

I

I, wobei $R_1$, $R_2$, $R_3$ und $R_4$ Alkylreste mit 1 bis 3 Kohlenstoffatomen sind,

b) 5 bis 25 Mol-% einer dimerisierten Fettsäure,

c) 25 bis 45 Mol-% mindestens einer aromatischen Dicarbonsäure,

wobei sich die Molsumme der Komponenten a) bis c) zu 100% ergänzt, und zusätzlich

d) 0 bis 50 Mol-% weiteren polyamidbildenden Monomeren.

**2.** Copolyamid nach Anspruch 1, dadurch gekennzeichnet, daß es übliche einsatzbedingte Additive enthält.

**3.** Copolyamid gemäß einem der vorhergehenden Ansprüche, dadurch gekennzeichnet, daß es aus

a) 50 Mol-% wenigstens eines cycloaliphatischen Diamins der Formel I, worin $R_1$, $R_2$, $R_3$ und $R_4$ Alkylreste mit 1 bis 3 Kohlenstoffatomen sind,

b) 5 bis 12 Mol-% einer dimerisierten Fettsäure und

c) 38 bis 45 Mol-% mindestens einer aromatischen Dicarbonsäure besteht, wobei sich die Molsummen zu 100% ergänzen.

**4.** Copolyamid gemäß einem der vorhergehenden Ansprüche, dadurch gekennzeichnet, daß das cycloaliphatische Diamin 1-Amino-3-aminomethyl-3,5-5'trimethylcyclohexan ist.

**5.** Copolyamid nach einem der vorhergehenden Ansprüche, dadurch gekennzeichnet, daß die dimerisierte Fettsäure auf eine langkettige ungesättigte Fettsäure, insbesondere eine Fettsäure mit 18 Kohlenstoffatomen, zurückgeht.

**6.** Copolyamid nach einem der vorhergehenden Ansprüche, dadurch gekennzeichnet, daß die dimerisierte Fettsäure einen Dimeranteil von mindestens 90 Gew.-%, insbesondere von mindestens 97 Gew.-%, besitzt.

**7.** Copolyamid gemäß einem der vorhergehenden Ansprüche, dadurch gekennzeichnet, daß die aromatische Dicarbonsäure aus Isophthalsäure oder Terephthalsäure oder aus einem Gemisch dieser Säuren, das insbesondere mindestens 25 Mol-% Isophthalsäure enthält, besteht.

**8.** Copolyamid nach einem der vorhergehenden Ansprüche, dadurch gekennzeichnet, daß weitere polyamidbildende Monomere d) aus aliphatischen Diaminen mit 2 bis 20 Kohlenstoffatomen, aromatischaliphatischen Diaminen mit 6 bis 12 Kohlenstoffatomen, aliphatischen Dicarbonsäuren mit 6 bis 20 Kohlenstoffatomen sowie Aminosäuren und Lactamen mit 4 bis 14 Kohlenstoffatomen bestehen.

**9.** Verfahren zur Herstellung von Copolyamiden gemäß einem der vorhergehenden Ansprüche, dadurch gekennzeichnet, daß in einer ersten Stufe unter Wasserdampfatmosphäre und unter einem Druck von 2 bis 30 bar bei einer Temperatur von 200°C bis 280°C eine Vorkondensation durchgeführt und die Schmelze nach Entspannen unter Rühren und unter einer Inertgasatmosphäre bei Normaldruck oder Vakuum bei einer Temperatur von ungefähr 240°C bis 320°C soweit kondensiert wird, daß die Endgruppensumme unter 300 µÄq/g des Polymeren absinkt.

**10.** Verwendung eines Copolyamids gemäß einem der vorhergehenden Ansprüche zur Herstellung von Formteilen mit einer hohen, vom Feuchtigkeitsgehalt wenig beeinflußten Glasumwandlungstemperatur und hoher Steifigkeit und Schlagzähigkeit.

Europäisches Patentamt

# EUROPÄISCHER RECHERCHENBERICHT

Nummer der Anmeldung

**EP 91 11 2308**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | EP-A-0 224 071 (SCHERING)<br>* Ansprüche; Beispiele; Tabelle 1 * | 1-10 | C 08 G 69/34 |
| X,Y | FR-A-1 581 969 (SCHERING)<br>* Zusammenfassung * | 1-10 | |
| Y | BE-A-676 711 (SCHERING)<br>* Ansprüche * | 1-10 | |
| Y | FR-A-1 559 111 (VICTOR WOLF LTD.)<br>* Zusammenfassung * | 1-10 | |

RECHERCHIERTE SACHGEBIETE (Int. Cl.5)

C 08 G

Der vorliegende Recherchenbericht wurde für alle Patentansprüche erstellt

| Recherchenort | Abschlußdatum der Recherche | Prüfer |
|---|---|---|
| Den Haag | 08 November 91 | LEROY ALAIN |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument